# EUROPEAN PATENT SPECIFICATION

(11) **EP 2 764 959 B1**
(45) Date of publication and mention of the grant of the patent: **11.03.2015**
(21) Application number: 14154077.3
(22) Date of filing: 06.02.2014
(51) Int. Cl.: B25J 9/10, B25J 17/02, B25J 19/00

(54) **Joint mechanism and robot**
Gelenkmechanismus und Roboter
Mécanisme d'articulation et robot

(30) Priority: 12.02.2013 JP 2013024957
(43) Date of publication of application: 13.08.2014
(73) Proprietor: Kabushiki Kaisha Yaskawa Denki, Kitakyushu-shi, Fukuoka 806-0004 (JP)
(72) Inventor: Tanaka, Kentaro, Kitakyushu-shi, Fukuoka 806-0004 (JP); Ichibangase, Atsushi, Kitakyushu-shi, Fukuoka 806-0004 (JP); Saito, Hiroshi, Kitakyushu-shi, Fukuoka 806-0004 (JP)
(74) Representative: Viering, Jentschura & Partner Patent- und Rechtsanwälte

(56) References cited:
- EP-A2- 2 264 865
- FR-A1- 2 771 153
- JP-A- S61 131 891
- US-A- 5 293 107
- US-A1- 2007 138 991

## Description

### BACKGROUND OF THE INVENTION

### Field of the Invention

An embodiment disclosed herein relates to a joint mechanism and a robot.

### Description of the Related Art

Conventionally, there is available, e.g., a joint mechanism provided between links of a robot, in which a speed reducer, a motor, a brake and an encoder are serially and coaxially arranged on a common shaft (see, e.g., Japanese Patent Application Publication No. 2011-24406).

Document FR 2 771 153 discloses a joint mechanism according to the preamble of claim 1. In this joint mechanism, a brake can also be coaxially arranged on a common hollow shaft with a motor unit and a speed reducer.

In the conventional configurations mentioned above, however, not only the speed reducer and the motor but also the brake and the encoder are formed to have a hollow center portion through which a cable or the like passes. Resultantly, the speed reducer, the motor, the brake or the encoder cannot be replaced alone without leaving the others intact. That is, when replacing one of the speed reducer, the motor, the brake and the encoder, it is necessary to first remove the cable existing within a joint and then disassemble the whole joint mechanism. Thus, a demand has existed for the improvement of maintainability.

### SUMMARY OF THE INVENTION

In view of the aforementioned situation, an embodiment disclosed herein provides a joint mechanism and a robot which are capable of enhancing maintainability while enabling installation of a cable therein.

In accordance with an aspect of the embodiment disclosed herein, there is provided a joint mechanism, including a first unit in which a motor unit and a speed reducer are coaxially arranged on a hollow first shaft, a second unit in which a brake unit and an encoder unit are coaxially arranged on a second shaft separated from the first shaft, and a power delivery unit configured to interconnect the first unit and the second unit.

With the embodiment disclosed herein, it is possible to separate the brake unit and the encoder unit even in a state in which a cable or the like extends through the interior of an arm or the like. This makes it possible to enhance the maintainability. The combination of the first unit and the second unit helps increase the degree of freedom in designing the joint mechanism.

### BRIEF DESCRIPTION OF THE DRAWINGS

Fig. 1 is a view showing a robot in accordance with an embodiment.
Fig. 2A is a view showing a joint mechanism of a joint unit provided in a wrist unit of a robot.
Fig. 2B is a sectional view taken along line IIB-IIB in Fig. 2A.
Fig. 3A is a view showing an example of the joint mechanism.
Fig. 3B is a view showing a state in which a first unit and a second unit of the joint mechanism shown in Fig. 3A are separated from each other.
Fig. 4 is a view showing the positional relationship of the first unit and the second unit shown in Fig. 3B, which are seen in a direction of arrow A in Fig. 3A.
Fig. 5 is a sectional view taken along line V-V in Fig. 3A, showing a power delivery unit of the joint mechanism shown in Fig. 3A.
Fig. 6 is a view showing a modified example of the joint mechanism.
Fig. 7 is a view showing a power delivery unit of the joint mechanism according to the modified example shown in Fig. 6.

### DESCRIPTION OF THE EMBODIMENTS

An embodiment of a joint mechanism and a robot disclosed herein will now be described in detail with reference to the accompanying drawings. The present disclosure is not limited to the embodiment to be described below.

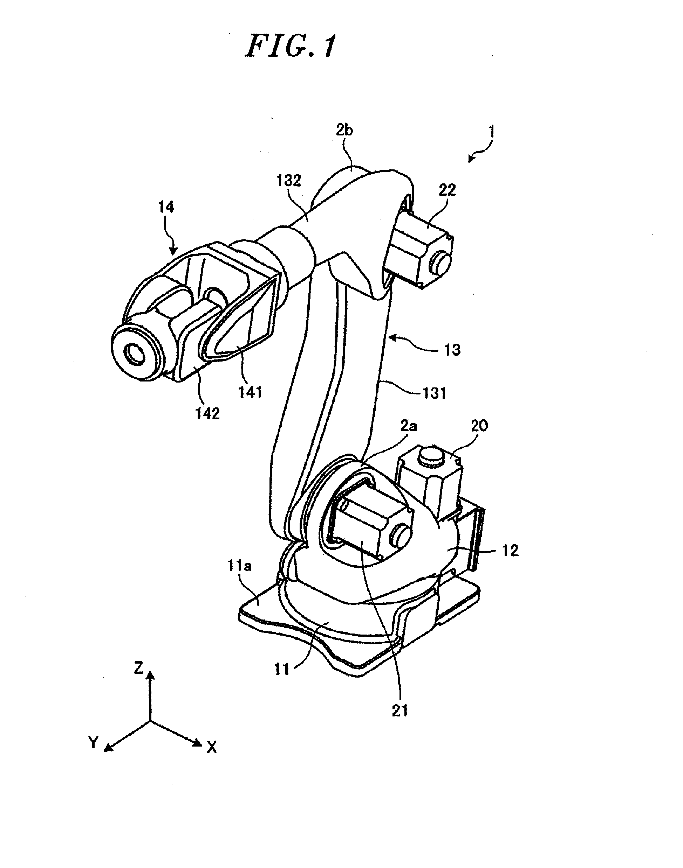

First, a robot 1 in accordance with the present embodiment will be described with reference to Fig. 1. In the following description, an X-axis and a Y-axis orthogonal to each other are defined as being parallel to an installation surface (e.g., horizontal surface) of the robot 1. A Z-axis is defined as being perpendicular, i.e., normal, to the installation surface.

In the present embodiment, the robot 1 is, e.g., an articulated robot. As shown in Fig. 1, the robot 1 includes a base 11, a body unit 12 arranged on the base 11, an arm unit 13 connected to the body unit 12 and a wrist unit 14 arranged at the tip end of the arm unit 13.

The base 11 is fixed to an installation surface through a seat portion 11a. The body unit 12 is arranged on the base 11 to horizontally rotate about a vertical axis (the Z-axis in Fig. 1). The body unit 12 is horizontally rotated by the operation of a motor unit 20.

The arm unit 13 connected to the body unit 12 includes a first arm 131 and a second arm 132 as a plurality of links. The first arm 131 and the second arm 132 are rotatably connected to each other through a joint unit.

Specifically, the first arm 131 is connected to the body unit 12 through a first joint unit 2a to swing in the front-rear direction (the Y-direction). The second arm 132 is connected to the tip end portion of the first arm 131 through a second joint unit 2b to swing in the up-down direction (the Z-direction). The first joint unit 2a for swinging the first arm 131 is provided with a first motor unit 21. The second joint unit 2b for swinging the second arm 132 is provided with a second motor unit 22.

The wrist unit 14 includes a first wrist 141 and a second wrist 142 as a plurality of links. The first wrist 141 and the second wrist 142 are rotatably connected to each other through a joint unit provided with a below-mentioned joint mechanism 3. That is to say, the robot 1 in accordance with the present embodiment has a structure in which a pair of links is connected to each other through the joint mechanism 3.

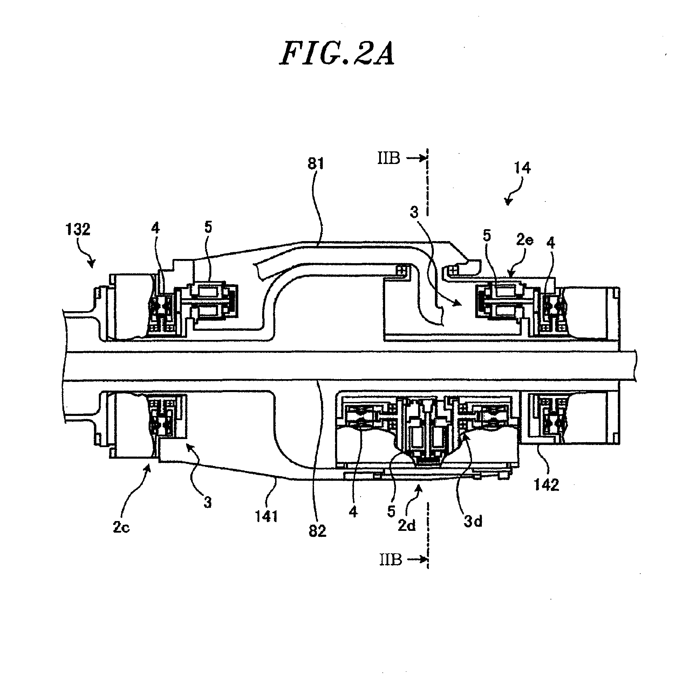

Now, the joint mechanism 3 of the joint unit employed in the wrist unit 14 will be described in detail with reference to Figs. 2A to 6.

As shown in Fig. 2A, the first wrist 141 and the second wrist 142 of the wrist unit 14 are rotatably connected to each other through a joint unit. Specifically, the first wrist 141 is formed into a bifurcated shape. The base end portion of the first wrist 141 is connected to the tip end portion of the second arm 132 to rotate about a rotation axis through a third joint unit 2c provided with the joint mechanism 3.

The second wrist 142 is connected to the tip end portion of the first wrist 141 through a fourth joint unit 2d to swing about a swing axis in, e.g., the Z-direction in Fig. 1. The second wrist 142 is connected to the first wrist 141 to rotate about a rotation axis by a fifth joint unit 2e. Each of the third joint unit 2c, the fourth joint unit 2d and the fifth joint unit 2e is formed into a hollow structure. A cable 82 including a hose extends through hollow portions of the third joint unit 2c and the fifth joint unit 2e. A brake unit 51 and an encoder unit 52, both of which will be described later, are disposed in a hollow portion of the fourth joint unit 2d.

First, description will be made on the joint mechanisms 3 provided in the third joint unit 2c and the fifth joint unit 2e. That is to say, description will be made on the joint mechanisms 3 arranged in the links (the first wrist 141 and the second wrist 142) serving as driven members and arranged in the joint units for rotating the links about their rotation axes.

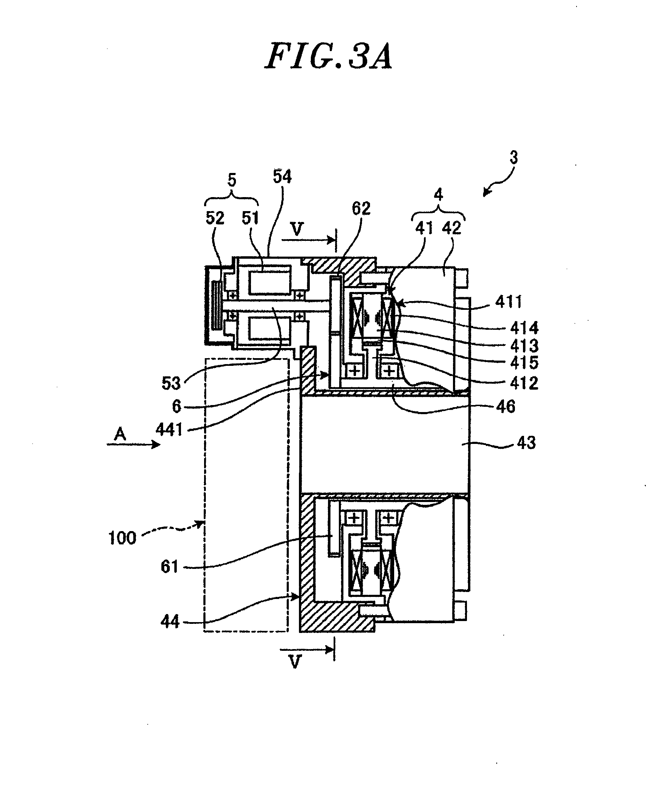

As shown in Fig. 3A, the joint mechanism 3 includes a first unit 4 in which a motor unit 41 and a speed reducer 42 are coaxially arranged with respect to a hollow portion 43 formed by an arm frame 44 of the robot 1, through a hollow rotation shaft 46 as a first shaft.

The joint mechanism 3 further includes a second unit 5 in which the brake unit 51 and the encoder unit 52 are coaxially arranged on a rotation shaft 53 as a second shaft separated from the hollow rotation shaft 46 (the first shaft). The joint mechanism 3 still further includes a first gear mechanism 6 as a power delivery unit arranged between the hollow rotation shaft 46 (the first shaft) and the rotation shaft 53 (the second shaft).

The first unit 4 is attached to the arm frame 44 of the robot 1. The motor unit 41 of the first unit 4 includes a stator 411 attached to the arm frame 44 of the robot 1 and a rotor 412 rotatably arranged with a predetermined gap left between the stator 411 and the rotor 412. In the present embodiment, the hollow rotation shaft 46 is one-piece formed with the rotor 412 of the motor unit 41 and is connected to the speed reducer 42. Thus, the rotation of the rotor 412 is delivered to the speed reducer 42 through the hollow rotation shaft 46. The hollow rotation shaft 46 need not be necessarily one-piece formed with the rotor 412 but may be independently formed and unified with the rotor 412. In Fig. 3A, reference symbol 413 designates a stator core. Reference symbol 414 designates a stator coil. Reference symbol 415 designates a rotor magnet.

In the meantime, the speed reducer 42 is attached to the arm frame 44 and is arranged adjacent to the motor unit 41 at the opposite side from the second unit 5. The speed reducer 42 includes a specified gear set (not shown) arranged therein and reduces the power delivered from the motor unit 41 at a predetermined speed reduction ratio. With this configuration, it is possible to rotate the links as driven members (e.g., the first wrist 141 and the second wrist 142) at a desired speed, the links being arranged with the arm frame 44 interposed therebetween.

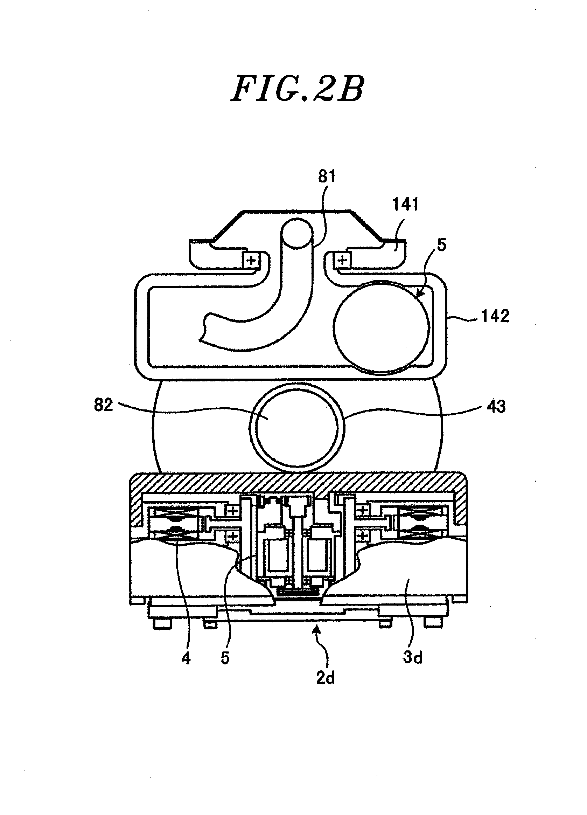

As mentioned above, the motor unit 41 and the speed reducer 42 of the first unit 4 have a hollow structure in which the motor unit 41 and the speed reducer 42 are supported on the hollow portion 43 of the arm frame 44 through the hollow rotation shaft 46. Therefore, as shown in Figs. 2A and 2B, a specified cable 82 can be arranged within the hollow portion 43 along the rotation axis direction.

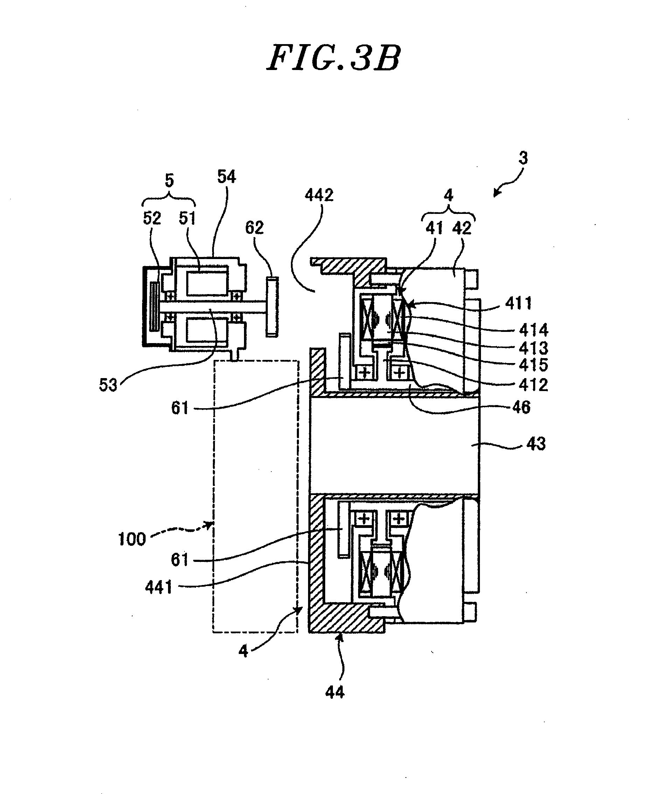

On the other hand, the second unit 5 is configured by coaxially arranging the brake unit 51 and the encoder unit 52 on the rotation shaft 53 as the second shaft extending in the longitudinal direction of a cylindrical unit frame 54. As shown in Fig. 3B, the second unit 5 is attached to one end surface 441 of the arm frame 44 at the opposite side to the first unit 4, by bolts (not shown) as connecting members. In Fig. 3B, reference symbol 442 designates an attachment hole where the second unit 5 is to be attached. The brake unit 51 and the encoder unit 52 of the second unit 5 may be the conventional ones well-known in the art.

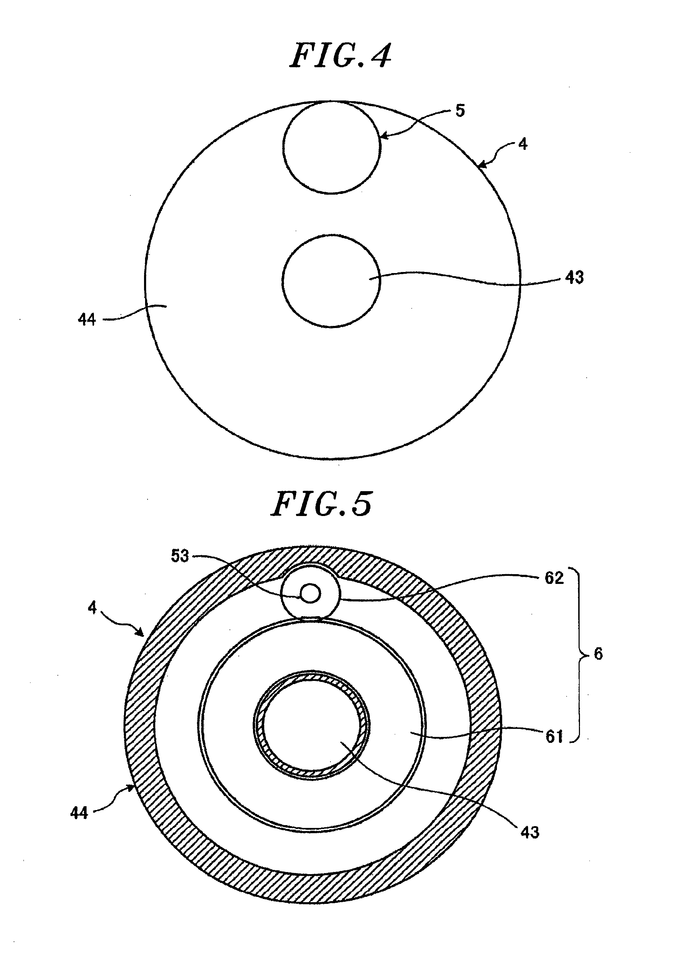

As shown in Fig. 3A and 4, the second unit 5 is attached in a state in which the axis of the rotation shaft 53 is radially offset with respect to the hollow rotation shaft 46 of the first unit 4. Specifically, in the joint mechanism 3 in accordance with the present embodiment, the second unit 5 is made smaller in size than the first unit 4 (the second unit 5 has a diameter of one quarter of the diameter of the first unit 4 when seen in the axial direction of the hollow rotation shaft 46). A specified space 100 is formed near the second unit 5 (Fig. 3A).

As shown in Fig. 2A, the fourth joint unit 2d for enabling the second wrist 142 to swing in the up-down direction can be arranged in the space 100. With this configuration, it is possible to reduce the longitudinal dimension of the wrist unit 14. As shown in Fig. 2B, the second unit 5 of the fifth joint unit 2e is arranged at the right side with respect to the hollow portion 43 of the arm frame 44. Therefore, a portion of the space 100 (see Fig. 3A) can be used in passing the cable 81 therethrough. In the illustrated example, although the second unit 5 is offset to the right side with respect to the hollow portion 43 of the arm frame 44, the second unit 5 may be offset to the left side with respect to the hollow portion 43 of the arm frame 44. The remaining space may be used in passing the cable 81 therethrough.

The first unit 4 and the second unit 5 are connected to each other by a first gear mechanism 6 serving as the power delivery unit. That is to say, the power of the motor unit 41 is delivered through the first gear mechanism 6 (the power delivery unit).

The first gear mechanism 6 includes a plurality of gears combined with each other at a predetermined gear ratio. As shown in Figs. 3A and 5, the first gear mechanism 6 in accordance with the present embodiment includes a large gear 61 arranged in the motor unit 41 of the first unit 4 and a small gear 62 arranged at the tip end of the rotation shaft 53 of the second unit 5. The large gear 61 is connected to the end surface of the hollow rotation shaft 46 by a fastening means, e.g., bolts (not shown).

As shown in Figs. 3A and 3B, the small gear 62 meshes with the large gear 61 so that the second unit 5 is attached to the first unit 4. The large gear 61 and the small gear 62 are formed of spur gears and, therefore, can be easily moved in the axial direction. Thus, the second unit 5 can be easily attached to and removed from the first unit 4 (see Fig. 3B).

As set forth above, the joint mechanism 3 in accordance with the present embodiment includes the first unit 4, which has the motor unit 41 and the speed reducer 42, and the second unit 5 which has the brake unit 51 and the encoder unit 52. The first unit 4 and the second unit 5 are detachably attached to each other. The hollow rotation shaft 46 of the motor unit 41 of the first unit 4 and the rotation shaft 53 of the second unit 5 are operatively connected by the first gear mechanism 6.

In the joint mechanism 3 configured as above, the second unit 5 can be readily attached to and removed from the first unit 4. Accordingly, the maintainability of the brake unit 51 and the encoder unit 52, which are required to be replaced more frequently than the motor unit 41 and the speed reducer 42, can be improved as compared with the conventional joint mechanism.

As described above, the large gear 61 is arranged in the motor unit 41 of the first unit 4, and the small gear 62 is arranged in the rotation shaft 53 of the second unit 5. Thus, the rotation of the motor unit 41 can be delivered to the rotation shaft 53 of the second unit 5 at an increased speed.

Accordingly, the power of the motor unit 41 can be delivered to the brake unit 51 at a reduced torque. For that reason, it is possible to employ a small and inexpensive brake structure. This contributes to the size reduction and the cost saving of the robot 1.

Since the rotation of the motor unit 41 can be delivered to the rotation shaft 53 of the second unit 5 at an increased speed, it is possible to use the encoder unit 52 having a low resolution. Therefore, just like the brake unit 51, it is possible to reduce the cost of the encoder unit 52 and to accomplish the cost-effectiveness of the robot 1.

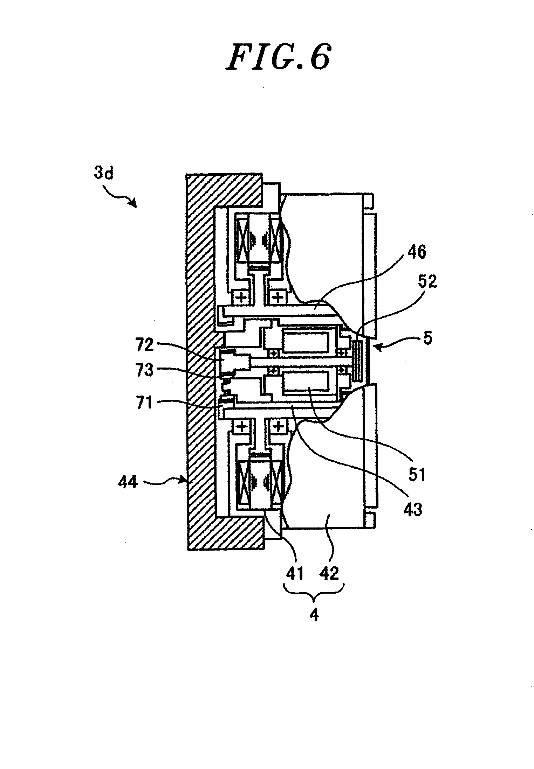

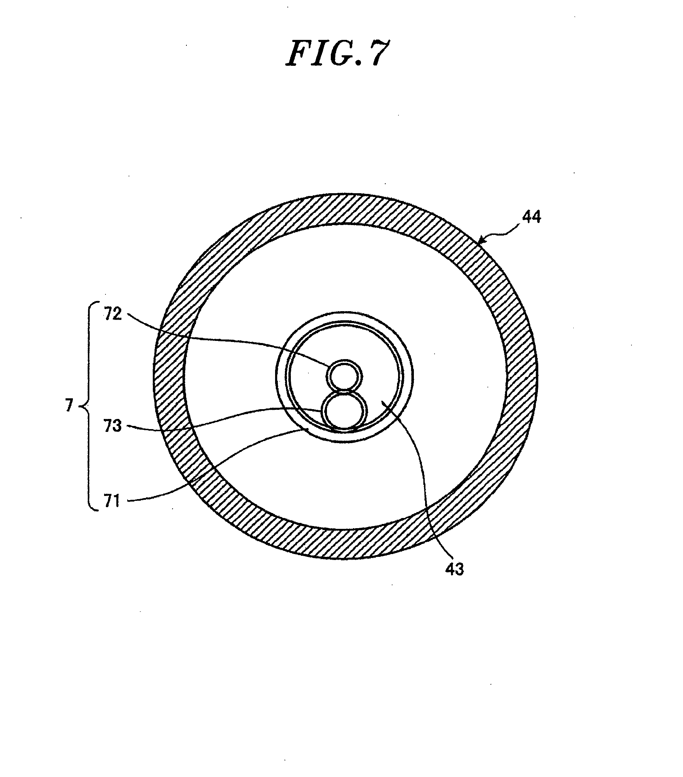

Next, a joint mechanism 3d in accordance with a modified example provided in the fourth joint unit 2d (see Fig. 2A) that swingably connects the second wrist 142 (the link) to the first wrist 141 will be described with reference to Figs. 6 and 7.

The joint mechanism 3d in accordance with the modified example is basically identical in configuration with the joint mechanisms 3 provided in the third joint unit 2c and the fifth joint unit 2e. As shown in Figs. 2A to 3B, the joint mechanism 3d includes a first unit 4 having a motor unit 41 and a speed reducer 42, and a second unit 5 having a brake unit 51 and an encoder unit 52, and the first unit 4 and the second unit 5 are separable from each other.

In the joint mechanism 3d in accordance with the present modified example, the second unit 5 is not attached to the outside of the first unit 4 but is arranged within the hollow portion 43 of the first unit 4. Specifically, in the fourth joint unit 2d, there is no need to pass a cable or the like through the hollow portion 43, and thus the second unit 5 is accommodated within the hollow portion 43. The axis of the hollow portion 43 of the first unit 4 coincides with the axis of the rotation shaft 53 of the second unit 5.

Since the second unit 5 is arranged within the hollow portion 43 of the first unit 4 as mentioned above, a second gear mechanism 7 shown in Fig. 7 is used as a power delivery unit instead of the first gear mechanism 6.

Like the first gear mechanism 6, the second gear mechanism 7 is composed of a plurality of gears combined with one another at a specified gear ratio. That is to say, as shown in Fig. 7, the second gear mechanism 7 includes a ring gear 71, an input gear 72 and an idle gear 73.

The ring gear 71 is fixedly secured to the tip-end-side inner circumferential surface of the hollow rotation shaft 46 of the first unit 4. The input gear 72 is arranged at the tip end of the rotation shaft 53 of the second unit 5. The idle gear 73 is disposed between the ring gear 71 and the input gear 72.

With this configuration, the rotation of the motor unit 41 is delivered to the ring gear 71, the idle gear 73 and then the input gear 72. In this case, the rotation of the motor unit 41 of the first unit 4 is delivered to the rotation shaft 53 of the second unit 5 at an increased speed. Accordingly, in the joint mechanism 3d of the fourth joint unit 2d, it is possible to reduce the size of the brake unit 51 and to reduce the resolution of the encoder unit 52. Moreover, it is possible to accomplish the cost-effectiveness of the robot 1.

As described above, in the joint mechanisms 3 of the third joint unit 2c and the fifth joint unit 2e of the wrist unit 14 according to the present embodiment, the interior of the hollow portion 43 of the first unit 4 can be used as a space through which a cable or the like passes. In the joint mechanism 3d of the fourth joint unit 2d, the interior of the hollow portion 43 can be used as an accommodation portion for the second unit 5.

The basic structure of the joint mechanisms 3 and 3d may remain the same in the embodiment and the modified example described above, and only the power delivery unit may be changed. Thus, in the joint mechanism 3 having a hollow structure through which the cable 82 or the like can pass and the joint mechanism 3d having a hollow structure within which the second unit 5d is accommodated as in the modified example, it is possible to use common parts.

In the present embodiment in which the second unit 5 is externally installed, the second unit 5 is attached to one end surface 441 of the arm frame 44. However, in the configuration in which the second unit 5 is installed outside the first unit 4, for example, the second unit 5 may be fitted into the attachment hole 442 formed on the one end surface 441 of the arm frame 44 and attached to the frame of the motor unit 41 of the first unit 4.

In the aforementioned embodiment and the modified example, the gear mechanisms are used as the power delivery units. As an alternative example, the power delivery unit may be formed of pulleys and a belt.

In the present embodiment and the modified example, there has been shown an example in which the joint mechanisms 3 and 3d are installed in the joint units of the wrist unit 14. However, the joint mechanisms 3 and 3d can be applied to, e.g., any joint unit that rotatably interconnects a pair of links.

It should be understood by those skilled in the art that various modifications, combinations, sub-combinations and alterations may occur depending on design requirements and other factors insofar as they are within the scope of the appended claims.

## Claims

1. A joint mechanism (3), comprising:
a first unit (4) in which a motor unit (41) and a speed reducer (42) are coaxially arranged on a hollow first shaft (46);
a second unit (5) in which an encoder (52) unit is arranged on a second shaft (53) separated from the first shaft; and
a power delivery unit (6) configured to interconnect the first unit and the second unit, **characterized in that** in the second unit, a brake unit (51) is coaxially arranged with the encoder unit on the second shaft.

2. The joint mechanism of claim 1, wherein the power delivery unit includes a plurality of gears (61, 62) combined with one another.

3. The joint mechanism of claim 1 or 2, wherein the power delivery unit is configured to deliver rotation of the first shaft to the second shaft at an increased speed.

4. The joint mechanism of any one of claims 1 to 3, wherein the second shaft has an axis offset with respect to the first shaft, and the second unit is externally attached to the first unit.

5. The joint mechanism of any one of claims 1 to 3, wherein the second unit is arranged within the first shaft of the first unit.

6. The joint mechanism of claim 1, wherein the power delivery unit includes pulleys and a belt.

7. A robot (1) comprising the joint mechanism of any one of claims 1 to 6.

8. The robot of claim 7, further comprising at least one pair of links interconnected by the joint mechanism.

## Patentansprüche

1. Ein Gelenkmechanismus (3), aufweisend:
eine erste Einheit (4), in der eine Motoreinheit (41) und ein Reduktionsgetriebe (42) koaxial an einer ersten Hohlwelle (46) angeordnet sind,
eine zweite Einheit (5), in der eine Codierungseinheit (52) an einer zweiten Welle (53) getrennt von der ersten Welle angeordnet ist, und
eine Leistungsabgabeeinheit (6), die eingerichtet ist, die erste Einheit und die zweite Einheit miteinander zu verbinden, **dadurch gekennzeichnet, dass** in der zweiten Einheit eine Bremseinheit (51) mit der Codierungseinheit koaxial an der zweiten Welle angeordnet ist.

2. Der Gelenkmechanismus gemäß Anspruch 1, wobei die Leistungsabgabeeinheit eine Mehrzahl von Getrieben (61, 62) aufweist, die miteinander kombiniert sind.

3. Der Gelenkmechanismus gemäß Anspruch 1 oder 2, wobei die Leistungsabgabeeinheit eingerichtet ist, das Drehen der ersten Welle mit einer erhöhten Geschwindigkeit an die zweite Welle abzugeben.

4. Der Gelenkmechanismus gemäß irgendeinem der Ansprüche 1 bis 3, wobei die zweite Welle eine bezüglich der ersten Welle versetzte Achse hat und die zweite Einheit von außen an der ersten Einheit angebracht ist.

5. Der Gelenkmechanismus gemäß irgendeinem der Ansprüche 1 bis 3, wobei die zweite Einheit innerhalb der ersten Welle der ersten Einheit angeordnet ist.

6. Der Gelenkmechanismus gemäß Anspruch 1, wobei die Leistungsabgabeeinheit Riemenscheiben und einen Riemen aufweist.

7. Ein Roboter (1), aufweisend den Gelenkmechanismus gemäß irgendeinem der Ansprüche 1 bis 6.

8. Der Roboter gemäß Anspruch 7, ferner mindestens ein Paar von Verbindungsstücken aufweisend, die durch den Gelenkmechanismus miteinander verbunden sind.

## Revendications

1. Un mécanisme d'articulation (3), comportant :
une première unité (4), dans laquelle une unité de moteur (41) et un réducteur de vitesse (42) sont disposés de façon coaxiale sur un premier arbre creux (46),
une deuxième unité (5), dans laquelle une unité de codeur (52) est disposée sur un deuxième arbre (53) séparée du premier arbre, et
une unité de fourniture de puissance (6) configurée afin d'interconnecter la première unité et la deuxième unité, **caractérisé en ce que**, dans la deuxième unité, une unité de freinage (51) est disposée de manière coaxiale avec l'unité de codeur sur le deuxième arbre.

2. Le mécanisme d'articulation selon la revendication 1, dans lequel l'unité de fourniture de puissance inclut une pluralité d'engrenages (61, 62) combinés les uns avec les autres.

3. Le mécanisme d'articulation selon la revendication 1 ou 2, dans lequel l'unité de fourniture de puissance est configurée afin de passer la rotation du premier arbre à une vitesse accrue au deuxième arbre.

4. Le mécanisme d'articulation selon l'une quelconque des revendications 1 à 3, dans lequel le deuxième arbre a un axe décalé par rapport au premier arbre, et la deuxième unité est attachée à la première unité extérieurement.

5. Le mécanisme d'articulation selon l'une quelconque des revendications 1 à 3, dans lequel la deuxième unité est disposée à l'intérieur du premier arbre de la première unité.

6. Le mécanisme d'articulation selon la revendication 1, dans lequel l'unité de fourniture de puissance inclut des poulies et une courroie.

7. Un robot (1), comportant le mécanisme d'articulation selon l'une quelconque des revendications 1 à 6.

8. Le robot selon la revendication 7, comportant en outre au moins une paire de liaisons interconnectées par le mécanisme d'articulation.
